Europäisches Patentamt

European Patent Office

Office européen des brevets

(11) Veröffentlichungsnummer: **0 463 504 A2**

## (12) EUROPÄISCHE PATENTANMELDUNG

(21) Anmeldenummer: **91109745.9**

(51) Int. Cl.5: **G02B 6/28**, H01L 31/14

(22) Anmeldetag: **13.06.91**

(30) Priorität: **25.06.90 DE 4020214**

(43) Veröffentlichungstag der Anmeldung:
**02.01.92 Patentblatt 92/01**

(84) Benannte Vertragsstaaten:
**DE FR GB IT NL SE**

(71) Anmelder: **SIEMENS AKTIENGESELLSCHAFT**
**Wittelsbacherplatz 2**
**W-8000 München 2(DE)**

(72) Erfinder: **Heise, Gerhard, Dipl.-Phys.**
**Bert-Brecht-Allee 10**
**W-8000 München 83(DE)**

(54) **Optischer Duplexer für bidirektionale optische Informationsübertragung.**

(57) 2.1 Bei einem optischen Duplexer für bidirektionale Informationsübertragung soll eine Phasendifferenz zwischen zwei auf verschiedenen optischen Wegen (W L2, W L3) zum Duplexer zurückreflektierten optischen Wellen zur Herabsetzung eines Nahnebensprechens unter Umgehung der Erzeugung einer Weglängendifferenz zwischen den beiden Wegen erzeugt werden.

2.2 Dazu ist eine Einrichtung (PS) zum Regeln der Phase einer auf einem der beiden Wege in den Duplexer zurückreflektierten optischen Welle vorgesehen, oder die beiden Wege weisen eine durch eine Brechzahldifferenz erzeugte optische Weglängendifferenz auf. Insbesondere ist es günstig, die Phasendifferenz zwischen den auf beiden Wegen in den Duplexer zurückreflektierten optischen Wellen auf /2 einzustellen oder festzulegen.

2.3 Anwendung bei der bidirektionalen Informationsübertragung.

FIG 1

EP 0 463 504 A2

Die Erfindung betrifft einen optischen Duplexer für bidirektionale optische Informationsübertragung nach dem Oberbegriff des Patentanspruchs 1.

Bei Duplexern der genannten Art besteht das Problem, daß am zweiten und dritten Tor üblicherweise Brechzahlsprünge vorhanden sind, an denen ein Teil der diesen beiden Toren von dem ersten Tor über den Koppler zugeführten optischen Wellen der ersten Wellenlänge $\lambda_1$ zum Koppler zurückreflektiert werden. Im Koppler werden die beiden zurückreflektierten Wellen zur Interferenz gebracht und in dieser Form dem vierten Tor als Störlicht zugeführt, das ein unerwünschtes Nahnebensprechen erzeugt. Die vom zweiten und dritten Tor zurückkommenden optischen Wellen der ersten Wellenlänge $\lambda_1$ gelangen üblicherweise auf zwei verschiedenen optischen Wegen zum Koppler zurück, die gleiche oder verschiedene optische Weglängen aufweisen können.

Das durch das obengenannte Störlicht erzeugte Nahnebensprechen ist von einer Phasendifferenz zwischen den in den beiden Wegen zurückgeführten optischen Wellen der ersten Wellenlänge $\lambda_1$ abhängig und es wurde bereits vorgeschlagen, dieses Nebensprechen durch eine Einstellung dieser Phasendifferenz auf einen vorbestimmten Wert zu minimieren, wobei überdies vorgeschlagen wurde, diesen vorbestimmten Wert durch eine entsprechend gewählte Weglängendifferenz zwischen den beiden optischen Wegen zu erzeugen. Diese passive Phasenanpassung erfordert sehr exakt zu beherrschende Technologien zur Herstellung des Duplexers, der vorzugsweise in integriert optischer Form hergestellt wird. Bei einem solchen integriert optischen Duplexer erfordert die Festlegung der Weglängendifferenz die Beherrschung der optischen Weglänge auf Bruchteile der Wellenlänge, wobei geometrische Toleranzen von etwa 20 nm auftreten.

Aufgabe der Erfindung ist es, aufzuzeigen, wie bei einem Duplexer der genannten Art eine Einstellung der Phasendifferenz zwischen den in den beiden Wegen geführten optischen Wellen der ersten Wellenlänge $\lambda_1$ auf einen zur Herabsetzung des Nahnebensprechens erforderlichen Wert unter Umgehung der Erzeugung einer Weglängendifferenz zwischen den beiden optischen Wegen erzeugt werden kann.

Diese Aufgabe wird durch die im kennzeichnenden Teil des Patentanspruchs 1 oder durch die im kennzeichnenden Teil des Patentanspruchs angegebenen Merkmale gelöst.

Bei dem erfindungsgemäßen Duplexer nach Anspruch 1 ist eine aktive Phaseneinstellung realisiert, während beim Duplexer nach Anspruch 5 die Phasenanpassung passiv ist.

Beide erfindungsgemäßen Lösungen lassen sich mit optischen Kopplern realisieren, die auf zwei Strahl- oder zwei Moden-Interferenz beruhen.

Bevorzugte und vorteilhafte Ausgestaltungen des Duplexers nach Anspruch 1 gehen aus den Ansprüchen 2 bis 4, 8 und 9, und bevorzugte und vorteilhafte Ausgestaltungen des Duplexers nach Anspruch 5 gehen aus den Ansprüchen 6 bis 9 hervor.

Die Erfindung wird in der nachfolgenden Beschreibung anhand der Figuren beispielhaft näher erläutert. Es zeigen:

Figur 1    eine Draufsicht auf einen erfindungsgemäßen Duplexer mit aktiver Phasenbeeinflussung,

Figur 2    eine Draufsicht auf einen erfindungsgemäßen Duplexer mit passiver Phasenanpassung,

Figur 3    eine integriert optische Realisierung eines Duplexers nach Figur 1 in perspektivischer Darstellung,

Figur 4    eine integriert optische Realisierung eines Duplexers nach Figur 1 oder 2, bei welcher eine Laserdiode als Sender zur Erzeugung der ersten Wellenlänge $\lambda_1$ auf dem gleichen Substrat integriert ist, und

Figur 5    eine integriert optische Realisierung eines Duplexers nach Figur 1 oder 2, bei welcher als Sender für die erste Wellenlänge $\lambda_1$ eine Laserdiode und als Empfänger für die zweite Wellenlänge $\lambda_2$ eine Photodiode auf dem gleichen Substrat integriert sind.

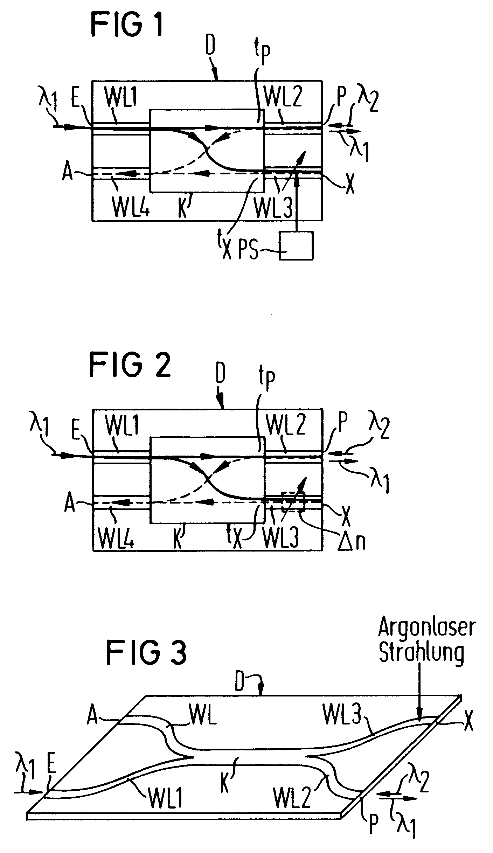

In den Figuren 1 und 2 bezeichnen das Bezugszeichen D den Duplexer, K den wellenlängenselektiven Koppler, E das erste Tor, P das zweite Tor, X das dritte Tor und A das vierte Tor des Kopplers K. Jedes Tor E, P, X und A ist durch das Ende eines betreffenden, zum Koppler K führenden Wellenleiters W L1, W L2, W L3 bzw. W L4 definiert.

Der Duplexer nach den Figuren 1 und 2 wird beispielsweise so betrieben, daß über das erste Tor E die von einem Laser ausgesandte, Information tragende optische Welle der ersten Wellenlänge $\lambda_1$ eingekoppelt und über den Koppler K zum Tor P übertragen wird, an dem diese optische Welle in eine optische Faser eingekoppelt und beispielsweise zu einem entfernt liegenden Duplexer der gleichen oder komplementären Art übertragen wird. Von der Faser wird dem zweiten Tor P eine Information tragende optische Welle der zweiten Wellenlänge $\lambda_2$ zugeführt, die über den Koppler K dem vierten Tor A zugeleitet ist, das an einen optischen Empfänger angeschlossen sein kann.

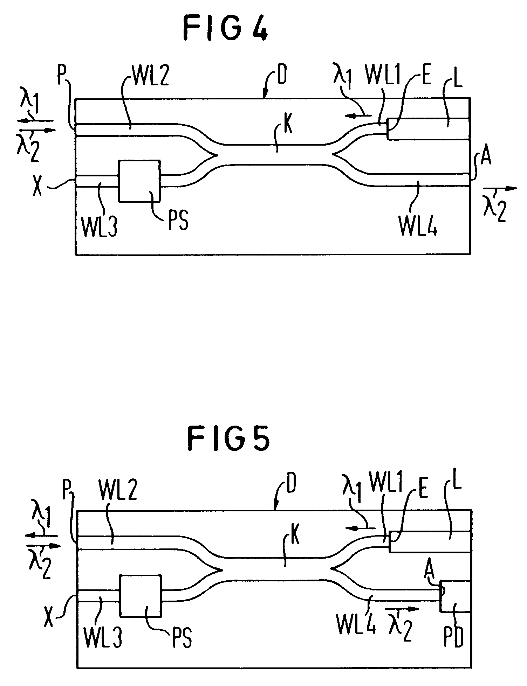

Der Sender zur Erzeugung der ersten Wellenlänge $\lambda_1$ und der Empfänger zum Empfang der zweiten Wellenlänge $\lambda_2$ können zusammen mit dem Duplexer auf einem gemeinsamen Substrat integriert sein. Figur 4 zeigt eine derartige Realisierung, bei welcher ein Laser L, beispielsweise eine Laserdiode, als Sender für die erste Wellenlänge $\lambda_1$ auf dem gemeinsamen Substrat S integriert ist. Figur 5 zeigt eine derartige Realisierung, bei welcher als Sender für die erste Wellenlänge $\lambda_1$ ein Laser L und als Empfänger für die zweite Wellenlänge $\lambda_2$ eine Photodiode PD auf dem gemeinsamen Substrat S integriert sind. Die Ausführung des Lasers L mit integriertem Wellenleiter WL1 kann in beiden Fällen beispielsweise gemäß der EP 0178 497 Bl (GR 84 P 1837 E) erfolgen. Bei der Realisierung nach Figur 5 wird vorteilhafterweise durch geeignete Einstellung der Phasendifferenz zwischen dem am zweiten Tor P und dem am dritten Tor X reflektierten Lichtes der ersten Wellenlänge $\lambda_1$ das durch Reflexion verursachte Nebensprechen vom Laser L auf die Photodiode verringert. Das dritte Tor X kann in einen optischen Sumpf münden, der auf dem Substrat integriert oder auf andere Weise an das dritte Tor X angeschlossen sein kann. Im letztgenannten Fall endet der Wellenleiter W L3 an einem Rand des Substrats, an dem auch der Wellenleiter W L2 endet, der an der Faser angekoppelt ist.

Üblicherweise wird die durch das erste Tor E eingekoppelte optische Welle der ersten Wellenlänge $\lambda_1$ zum Teil auch dem dritten Tor X zugeführt. Generell ist am zweiten Tor P und am dritten Tor X ein Reflektionskoeffizient vorhanden, der einen Teil der diesem Tor P bzw. X zugeführten optischen Welle der ersten Wellenlänge $\lambda_1$ auf dem Wellenleiter W L2 bzw. dem Wellenleiter W L3 zum Koppler K zurückreflektiert. Im Koppler werden diese beiden zurückreflektierten Teile zur Interferenz gebracht und im Wellenleiter W L4 überlagert dem vierten Tor A zugeführt.

Die Pfade, auf denen die durch das erste Tor E eingekoppelte optische Welle der Wellenlänge $\lambda_1$ zum zweiten Tor P bzw. zum dritten Tor X gelangt, sind in den Figuren in durchgezogenen Linien eingezeichnet, die eine nach rechts weisende Pfeilspitze aufweisen.

Die Pfade, auf denen das vom zweiten Tor P bzw. vom dritten Tor X zum Koppler K zurückreflektierte Licht zum vierten Tor A gelangt, ist in den Figuren 1 und 2 in gestrichelten Linien dargestellt, die mit einer nach links zeigenden Pfeilspitze versehen sind.

Insbesondere gelangt das vom zweiten Tor P reflektierte Licht auf einen durch den Wellenleiter W L2 gegebenen ersten optischen Weg zum Koppler K, während das am dritten Tor X reflektierte Licht auf einem durch den Wellenleiter W L3 gegebenem zweiten optischen Weg zum Koppler K zurück.

Bei der Anordnung nach Figur 1 ist erfindungsgemäß eine Einrichtung PS zum Regeln der Phase der auf einen der beiden optischen Wege W L2 und W L3, beispielsweise dem optischen Weg W L3 zum Koppler zurückkommenden optischen Welle der einen Wellenlänge $\lambda_1$ auf einen vorbestimmten Wert aus einem vorbestimmten Wertebereich vorgesehen.

Bei dem Duplexer nach Figur 2 weisen die beiden optischen Wege W L2 und W L3 erfindungsgemäß eine durch eine permanente Brechzahldifferenz $\Delta n$ erzeugte vorgebbare optische Weglängendifferenz auf. Bei dem Beispiel nach Figur 2 ist diese Brechzahldifferenz $\Delta n$ bei dem Wellenleiter W L3 realisiert. Die permanente Brechzahldifferenz $\Delta n$ kann durch eine geometrisch verschiedene Formgebung eines optischen Wellenleiters W L3 oder W L2 eines der beiden optischen Wege gegenüber einem optischen Wellenleiter W L2 bzw. W L3 des anderen optischen Weges erzeugt sein. Beispielsweise läßt sich bei einem in InP vergrabenen Rippenwellenleiter mit einer wellenleitenden Schicht aus InGaAsP mit $\lambda_{gap}$ = 1,05 $\mu m$, einer Rippenhöhe von 0,5 $\mu m$ und einer Breite der Rippe von 1 $\mu m$ eine Änderung der effektiven Brechzahl von 0,004 erzielen, indem die Dicke der quarternären Schicht neben der Rippe von 300 nm auf 200 nm verringert wird. Geringere Brechzahländerungen lassen sich entsprechend durch geringere Ätztiefen erreichen.

Die permanente Brechzahldifferenz $\Delta n$ kann auch durch eine Dotierung eines der beiden optischen Wege erzeugt sein, in welcher Dotierung sich der eine Weg vom anderen unterscheidet.

Das in Figur 3 dargestellte integriert optische Ausführungsbeispiel eines Duplexers nach Figur 1 ist ein Duplexer mit thermischer Phasenanpassung, bei dem der Koppler K aus einem aus Electronic Letters 25 (1989) Seiten 1180 - 1181 beschriebenen BOA-Richtkoppler besteht. Bei diesem Duplexer ist das Nahnebensprechen beispielsweise durch die erfindungsgemäße thermische Beeinflussung der Brechzahl verringert. Wie beim Duplexer nach Figur 1 soll beim Duplexer nach Figur 3 am zweiten Tor P die Streckenfaser angebracht sein. Ankommendes Licht der zweiten Wellenlänge $\lambda_2$ soll zum vierten Tor A geleitet werden, am ersten Tor E wird das auf die Strecke zu sendende Licht der ersten Wellenlänge $\lambda_1$ eingekoppelt. Das Nahnebensprechen gibt an, wieviel Licht vom ersten Tor E zum vierten Tor A gelangt. Zur Phasenbeeinflussung wurde das Licht eines Argon-Ionen-Lasers auf den Wellenleiter W L2 oder den Wellenleiter W L3 fokussiert. Durch die lokale Erwärmung verändert sich die Brechzahl. Durch das aktive Trimmen konnte bei diesem Experiment das Nahnebensprechen um 90 % verringert werden. Es konnte festgestellt werden, daß das so erreichbare minimale Nahnebensprechen nicht mehr durch geführtes Licht, sondern durch Streulicht in der Wellenleiterschicht gegeben ist.

Die Heizung des betreffenden Wellenleiters kann beispielsweise über eine aufgedampfte Leiterbahn oder einen mitintegrierten Widerstand erfolgen. Für InGaAsP/InP-Wellenleiter mit $\lambda_{gap}$ und einem gemessenen Temperaturkoeffizienten der Brechzahl von 2, 2 x $10^{-4}$ 1/K folgt, das für die geforderte Phasenverschiebung über eine Strecke von L = 100 $\mu$m bei $\lambda$ = 1,5 $\mu$m eine Temperaturdifferenz von etwa 18°K zwischen dem Wellenleiter W L2 und dem Wellenleiter W L3 erforderlich ist. Bei geeignet dimensionierten Bauelementen, etwa 70 $\mu$m Abstand zwischen den Wellenleitern W L2 und W L3 und einer geheizten Fläche von 100 x 1 $\mu$m$^2$ wäre dazu eine Heizleistung von etwa 100 mW erforderlich.

Die Einrichtung PS des Duplexers nach Figur 1 kann auch ein auf Ladungsträgerinjektion beruhender Phasenschieber sein, der in einen der beiden Wellenleiter W L2 oder W L3 integriert ist. Die Abhängigkeit der Brechzahl von InP von der Elektronendichte N beträgt dn/dN = - $10^{-20}$ cm$^{-3}$. Bei einer Länge des Phasenschiebers von 100 $\mu$m ist daher eine zusätzliche Trägerdichte von 4 x $10^{17}$ cm$^{-3}$ erforderlich. Diese kann mit einer pin-Rippenwellenleiterstruktur problemlos injiziert werden. Mit einem derartigen Phasenschieber kann das Nahnebensprechen auf etwa 3 x $10^{-4}$ des Maximalwertes kompensiert werden.

Phasenmodulatoren sind in verschiedenen Materialien, beispielsweise in Glas, in LiNbO$_3$ oder III/V-Halbleitern realisiert worden. Elektrooptische Phasenbeeinflussung ist beispielsweise in LiNbO$_3$ und Phasenbeeinflussung durch Ladungsträgerinjektion auf InGaAsP/InP realisiert worden. Bei einer Länge des Phasenmodulators von 100 $\mu$m ist eine maximale Brechzahländerung von $\Delta$n = 0,004 erforderlich.

Bei allen Duplexern, bei denen am zweiten Tor P und dritten Tor X im wesentlichen das gleiche Reflexionsvermögen für die erste Wellenlänge $\lambda_1$ vorhanden ist, kann das durch Reflexion erzeugte Nahnebensprechen für beliebiges Reflexionsvermögen vorteilhafterweise vollständig kompensiert werden, wenn die Phasendifferenz auf einen vorbestimmten Wert von $\pi/2$ eingestellt oder festgelegt wird. Davon ungeachtet sollte das Reflexionsvermögen so gering wie möglich sein, um die Einfügeverluste des Duplexers und die Rückwirkung der Reflexion auf das erste Tor E gering zu halten.

Um auch im ungünstigsten Fall eine vollständige Kompensation des Nahnebensprechens zu ermöglichen, ist ein Stellbereich für die Phase von maximal $\pi/2$ erforderlich. Für eine maximale Wellenlänge $\lambda$ = 1,6 $\mu$m bedeutet dies, daß die Weglängendifferenz zwischen dem Wellenleiter W L2 und dem Wellenleiter W L3 kleiner oder gleich 0,4 $\mu$m sein muß. Bei einer Länge des Phasenmodulators von 100 $\mu$m oder einer Strecke des Wellenleiters W L2 oder W L3 von 100 $\mu$m ist demnach eine maximale Brechzahländerung $\Delta$n von 0,004 erforderlich.

Mündet das dritte Tor X eines erfindungsgemäßen Duplexers in einen optischen Sumpf, so hängt das Nahnebensprechen im wesentlichen nur vom Reflexionsvermögen am zweiten Tor P ab.

Mit einem erfindungsgemäßen Duplexer läßt sich eine Kanaltrennung von mindestens 45 dB erreichen, wie sie für integriert optische Duplexer erforderlich ist.

**Patentansprüche**

1. Optischer Duplexer (D) für bidirektionale optische Informationsübertragung,
mit einem vier Tore (E, P, X, A) aufweisenden wellenlängenselektiven optischen Koppler (K),
wobei ein erstes Tor (E) zum Einkoppeln einer ersten optischen Wellenlänge ($\lambda_1$) und ein zweites Tor (P) zum Einkoppeln einer zweiten optischen Wellenlänge ($\lambda_2$) vorgesehen ist,
wobei der Koppler (K) derart ausgebildet ist, daß eine durch das erste Tor (E) eingekoppelte optische Welle der ersten Wellenlänge ($\lambda_1$) teilweise dem zweiten Tor (P) und teilweise einem dritten Tor (X) zugeführt ist, daß eine durch das zweite Tor (P) eingekoppelte optische Welle der zweiten Wellenlänge ($\lambda_2$) ganz oder teilweise einem vierten Tor (A) zugeführt ist, daß eine vom zweiten Tor (P) zum Koppler (K) zurückkommende optische Welle der ersten Wellenlänge ($\lambda_1$) dem Koppler (K) auf einem ersten Weg (W L2) zugeführt und eine vom dritten Tor (X) zum Koppler (K) zurückkommende optische Welle der ersten Wellenlänge ($\lambda_1$) dem Koppler (K) auf einem zweiten Weg (W L3) zugeführt ist, daß die auf beiden Wegen (W L2, W L3) zum Koppler (K) zurückkommenden optischen Wellen der ersten Wellenlänge ($\lambda_1$) im Koppler (K) zur Interferenz gebracht und die überlagerten optischen Wellen der ersten Wellenlänge ($\lambda_1$) ganz oder teilweise dem vierten Tor (A) zugeführt sind; **dadurch gekennzeichnet**, daß eine Einrichtung (PS) zum Regeln der Phase der auf einem der beiden Wege (W L2, W L3) zum Koppler (K) zurückkommenden optischen Welle der einen Wellenlänge ($\lambda_1$) auf einen vorbestimmten Wert aus einem vorbestimmten Wertebereich vorgesehen ist.

2. Duplexer nach Anspruch 1, **dadurch gekennzeichnet**, daß die Einrichtung (PS) zum Regeln der Phase eine Brechzahl in einem der beiden optischen Wege (W L2, W L3) durch thermische Beeinflussung auf einen zur Erzielung des vorbestimmten Wertes der Phase erforderlichen Wert einstellt.

3. Duplexer nach Anspruch 1 oder 2, **dadurch gekennzeichnet**, daß die Einrichtung (PS) zum Regeln der Phase eine Brechzahl eines der beiden optischen Wege (W L2, W L3) durch elektrooiptsche Beeinflussung auf einen zur Erzielung des vorgebbaren Wertes der Phase erforderlichen Wert einstellt.

4. Duplexer nach einem der Ansprüche 1 bis 3, **dadurch gekennzeichnet**, daß die Einrichtung zum Regeln der Phase eine Brechzahl eines der beiden optischen Wege (W L2, W L3) durch Ladungsträgerinjektion in ein Halbleitermaterial auf einen zur Erzielung des vorgebbaren Wertes der Phase erforderlichen Wert einstellt.

5. Optischer Duplexer (D) für bidirektionale optische Informationsübertragung, mit einem vier Tore (E, P, X, A) aufweisenden wellenlängenselektiven optischen Koppler (K), wobei ein erstes Tor (E) zum Einkoppeln einer ersten optischen Wellenlänge ($\lambda_1$) und ein zweites Tor (P) zum Einkoppeln einer zweiten optischen Wellenlänge ($\lambda_2$) vorgesehen ist, wobei der Koppler (K) derart ausgebildet ist, daß eine durch das erste Tor (E) eingekoppelte optische Welle der ersten Wellenlänge ($\lambda_1$) teilweise dem zweiten Tor (P) und teilweise einem dritten Tor (X) zugeführt ist, daß eine durch das zweite Tor (P) eingekoppelte optische Welle der zweiten Wellenlänge ($\lambda_2$) ganz oder teilweise einem vierten Tor (A) zugeführt ist, daß eine vom zweiten Tor (P) zum Koppler (K) zurückkommende optische Welle der ersten Wellenlänge ($\lambda_1$) dem Koppler (K) auf einem ersten Weg (W L2) zugeführt und eine vom dritten Tor (X) zum Koppler (K) zurückkommende optische Welle der ersten Wellenlänge ($\lambda_1$) dem Koppler (K) auf einem zweiten Weg (W L3) zugeführt ist, daß die auf beiden Wegen (W L2, W L3) zum Koppler (K) zurückkommenden optischen Wellen der ersten Wellenlänge ($\lambda_1$) im Koppler (K) zur Interferenz gebracht und die überlagerten optischen Wellen der ersten Wellenlänge ($\lambda_1$) ganz oder teilweise dem vierten Tor (A) zugeführt sind, insbesondere nach einem der vorhergehenden Ansprüche, **dadurch gekennzeichnet**, daß die beiden optischen Wege (W L2, W L3) eine durch eine permanente Brechzahldifferenz ($\Delta$n) erzeugte vorgebbare optische Weglängendifferenz aufweisen.

6. Duplexer nach Anspruch 5, **dadurch gekenn-**

**zeichnet,** daß die permanente Brechzahldifferenz ($\Delta$n) durch eine geometrisch verschiedene Formgebung eines optischen Wellenleiters eines der beiden optischen Wege (W L2, W L3) gegenüber einem optischen Wellenleiter des anderen optischen Weges erzeugt ist.

7. Duplexer nach Anspruch 5 oder 6, **dadurch gekennzeichnet**, daß die permanente Brechzahldifferenz ($\Delta$n) durch eine Dotierung eines der beiden optischen Wege (W L2, W L3) erzeugt ist, in welcher Dotierung sich der eine Weg vom anderen unterscheidet.

8. Duplexer nach einem der vorhergehenden Ansprüche, **dadurch gekennzeichnet**, daß entweder das zweite (P) oder das dritte Tor (X) des Kopplers (K) in einen optischen Sumpf mündet.

9. Duplexer nach einem der vorhergehenden Ansprüche, **dadurch gekennzeichnet**, daß die Phase der auf dem einen der beiden optischen Wege (W L2, W L3) zum Koppler zurückkommenden optischen Welle der einen Wellenlänge ($\lambda_1$) auf einen vorbestimmten Wert eingestellt oder festgelegt wird, der sich von der Phase der auf dem anderen der beiden Wege (W L2, W L3) zum Koppler (K) zurückkommenden optischen Welle der einen Wellenlänge ($\lambda_1$) um $\pi$/2 unterscheidet

10. Duplexer nach einem der vorhergehenden Ansprüche, **dadurch gekennzeichnet**, daß der Duplexer (D) auf einem Substrat (S) integriert ist.

11. Duplexer nach Anspruch 10, **dadurch gekennzeichnet**, daß ein optischer Sender (L) zur Erzeugung der durch das erste Tor (E) einzukoppelnden ersten optischen Wellenlänge ($\lambda_1$) auf dem Substrat integriert ist.

12. Duplexer nach Anspruch 10 oder 11, **dadurch gekennzeichnet**, daß ein optischer Empfänger (PD) für die dem vierten Tor (A) zugeführte optische Wellenlänge ($\lambda_2$) auf dem Substrat (S) integriert ist.

EP 0 463 504 A2

**FIG 1**

**FIG 2**

**FIG 3**

## FIG 4

## FIG 5